# EUROPEAN PATENT SPECIFICATION

(11) **EP 3 262 947 B1**
(45) Date of publication and mention of the grant of the patent: **06.11.2019**
(21) Application number: 16755650.5
(22) Date of filing: 25.02.2016
(51) Int. Cl.: A23C 19/00, A23C 19/02

(54) **CHEESE PRODUCTION METHOD**
KÄSEHERSTELLUNGSVERFAHREN
PROCÉDÉ DE PRODUCTION DE FROMAGE

(30) Priority: 26.02.2015 JP 2015036918
(43) Date of publication of application: 03.01.2018
(73) Proprietor: Ajinomoto Co., Inc., Tokyo 104-8315 (JP)
(72) Inventor: SATO, Hiroaki, Kawasaki-shi Kanagawa 210-8681 (JP)
(74) Representative: Strehl Schübel-Hopf & Partner
(86) International application number: PCT/JP2016/055690
(87) International publication number: WO 2016/136906

(56) References cited:
- EP-A1- 1 884 165
- WO-A1-2010/035825
- FR-A1- 2 357 183
- GB-A- 935 053
- GB-A- 2 003 719
- JP-A- H08 173 032
- JP-A- 2002 369 653
- US-A1- 2002 106 423
- S V KARADBHAJNE ET AL: "Studies on Effect of Different Coagulant on Paneer Texture Prepared from Buffalo Milk", INTERNATIONAL JOURNAL OF PHARMTECH RESEARCH, vol. 2, no. 3, 1 September 2010 (2010-09-01), pages 1916-1923, XP55476913, IN ISSN: 0974-4304
- KANADE SHIBANUMA ET AL.: 'Cho Koon Sakkin Gyunyu o Mochiita Katei de Tsukuru Cheese-yo Nyu Kakohin Seizo no Shisaku Teian' OBIHIRO UNIVERSITY OF AGRICULTURE AND VETERINARY MEDICINE TOKUBETSU KENKYU HOKOKU vol. 23, 2009, pages 13 - 14, XP009505836
- TOMIO OHASHI ET AL.: 'Studies on the Physical Properties of Milk and Milk Products' NIHON SHOKUHIN KOGYO GAKKAISHI vol. 26, no. 11, 01 January 1979, pages 480 - 486
- IMAFIDON, G. I. ET AL.: 'Rennet Coagulability of High-Heat Treated Milk Influenced By Time of pH Adjustment' J. FOOD SCI vol. 58, no. 6, 01 November 1993, pages 1300 - 1302, XP000418014 DOI: 10.1111/J.1365-2621.1993.TB06170.X
- LO, C.G. ET AL.: 'Incorporation of Native and Denatured Whey Proteins into Cheese Curd for Manufacture of Reduced Fat, Havarti-type Cheese' J. DAIRY SCI. vol. 81, no. 1, 01 January 1998, pages 16 - 24, XP026993559

## Description

### Technical Field

The present invention relates to a method for producing cheese.

### Background Art

Cheese is classified into natural cheese and processed cheese. Natural cheese is further classified into non-mature cheese (fresh cheese) and mature cheese.

Common methods for producing cheese are exemplified below. First, a milk clotting enzyme and so forth are added to a milk raw material such as cow milk to form aggregates (cheese curd). Then, by separating the cheese curd from milk serum (whey) and collecting them, fresh cheese can be obtained. Further, by maturing the fresh cheese, mature cheese can be obtained. By heat-melting the natural cheese obtained as described above (fresh cheese or mature cheese), processed cheese can be produced. Especially in the case of fresh cheese, as water retention increases, the yield also increases. However, cheese having unduly high water content generally shows low physical strength and mouthfeel unfavorable as cheese. Therefore, from the aspects of palatability and economy, cheese showing high water retention ability, but also showing favorable mouthfeel as cheese is desired.

In common cheese production methods, cheese is produced from raw material milk that is not subjected to any heat sterilization process, low temperature-sterilized milk treated at 63 to 68°C for about 30 minutes, or high temperature-sterilized milk treated at 71 to 75°C for about 15 seconds as a raw material. It is considered that, if ultra high temperature-sterilized milk heat-treated at a temperature of 120°C or higher is used as a raw material, a cheese curd is not formed, and cheese cannot be produced. However, shelf lives of low temperature-sterilized milk and high temperature-sterilized milk are as short as about ten days, and therefore there has been a problem that cheese cannot be produced in a place remote from a dairy area where it is difficult to supply of raw material milk. On the other hand, if ultra high temperature-sterilized milk is aseptically packaged, it can be stored for such a long period of time as about 6 months at an ordinary temperature. Therefore, if cheese can be produced by using ultra high temperature-sterilized milk as the raw material, there is provided a remarkable advantage that cheese can be produced in a place remote from a dairy area where it is difficult to supply of raw material milk, and so forth.

Non-patent document 1 discloses a method for producing cheese comprising adding hydrochloric acid to skimmed milk heat-treated at 80 to 130°C. However, Non-patent document 1 does not disclose use of a reducing agent.

Patent document 1 discloses a method for producing cheese, which uses a protein crosslinking enzyme such as glucose oxidase. However, Patent document 1 does not disclose use of a reducing agent. Patent document 1 does not include any example of production of cheese by using ultra high temperature-sterilized milk as a raw material, either.

Patent document 2 discloses a method for producing cheese containing lactobionic acid, which comprises the step of preparing a liquid cheese mix containing milk ingredients, lactose, and an oxidase, and catalytically oxidizing at least a part of the lactose with the oxidase to generate lactobionic acid in the cheese mix, and the step of clotting the cheese mix to obtain a cheese product. However, Patent document 1 does not disclose use of a reducing agent, and production of cheese using ultra high temperature-sterilized milk as a raw material.

Patent document 3 discloses a method for producing cheese, which comprises adding calcium chloride to ultra high temperature-sterilized milk. However, Patent document 3 does not disclose use of a reducing agent.

Patent document 4 discloses a method for producing a dairy product such as cheese, which uses a transglutaminase and a reducing agent. However, Patent document 4 does not disclose production of cheese using ultra high temperature-sterilized milk as a raw material. Patent document 4 describes that, in the cheese production, over-heating of a milk raw material is not preferred.

### Prior art references

### Patent documents

Patent document 1: Japanese Patent Laid-open (Kohyo) No. 2014-516576
Patent document 2: Japanese Patent No. 4249491
Patent document 3: FR 2357183 A1
Patent document 4: Japanese Patent No. 3951584

### Non-patent document

Non-patent document 1: Characteristics of Mozzarella Cheese Made by Direct Acidification from Ultra-high-Temperature Processed Milk, H.W. Schafer et al., April 1975, Volume 58, Issue 4, Pages 494-501

S V KARDBHAJNE ET AL: "Studies on Effect of Different Coagulant on Paneer Texture Prepared from Buffalo Milk", INTERNATIONAL JOURNAL OF PHARMTECH RESEARCH, vol. 2, no. 3, 1 September 2010, pages 1916-1923, discloses a method for producing a cheese product, in which buffalo milk that is standardized on the level of 6% milk fat is heated to a temperature of 85 °C, and ascorbic acid is added to the milk mixture. EP 1 884 165 A1, GB 2 003 719 A, US 2002/106423 A1, and EP-A-1 197 152 also disclose a method for producing a cheese product, in which ascorbic acid is added to a milk product that has been heat-treated.

### Summary of the Invention

### Object to be Achieved by the Invention

An object of the present invention is to provide a method for producing a cheese.

### Means for Achieving the Object

The inventors of the present invention conducted various researches, as a result, found that by using a reducing agent, using a reducing agent and a transglutaminase in combination, or using a calcium ingredient and a transglutaminase in combination, cheese of good quality can be produced from a heat-treated milk raw material such as ultra high temperature-sterilized milk, and accomplished the present invention.

The present invention can be embodied, for example, as follows.
[1] A method for producing cheese, the method comprising
   treating a milk raw material containing a milk protein with the following ingredient (A) or (B):
   (A) one or more kinds of ingredients selected from reduced glutathione, cysteine, γ-glutamylcysteine, sulfurous acid, ascorbic acid, erythorbic acid, and a salt thereof;
   (B) a transglutaminase and a calcium salt, wherein the milk raw material containing a milk protein has been heat-treated at a temperature of 120°C to 150°C for 0.5 to 15 seconds.
[2] The method mentioned above, wherein the milk raw material consists of one or more kinds of raw materials selected from whole milk, skimmed milk, partially skimmed milk, milk serum, cream, buttermilk, a processed product thereof, and an ingredient-adjusted product thereof.
[3] The method mentioned above, wherein the reduced glutathione is a yeast extract containing reduced glutathione.
[4] The method mentioned above, wherein 0.000001 to 0.01 g of the reduced glutathione is added per 1 g of the milk raw material.
[5] The method mentioned above, wherein when the method comprises treating the milk raw material with the ingredient (A), the method further comprises treating the milk raw material with a transglutaminase and/or a calcium salt.
[6] The method mentioned above, wherein 0.00033 to 33 U of the transglutaminase is added per 1 g of the milk protein.
[7] The method mentioned above, wherein the calcium salt is calcium chloride.

### Brief Description of the Drawings

[Fig. 1] A graph showing the results of the measurement of breaking strength of cheese.
[Fig. 2] A graph showing the results of the measurement of yield of cheese.
[Fig. 3] Drawings showing appearance of cheese (photographs).

### Modes for Carrying out the Invention

Hereafter, the present invention will be explained in detail. The following explanations may be applied to the present invention independently or in combination.

### <1> Cheese

In the present invention, type of the cheese is not particularly limited. The cheese may be natural cheese or processed cheese. The cheese may be non-mature cheese (fresh cheese) or mature cheese. The cheese may be any of soft cheese, semi-hard cheese, and hard to super-hard cheese (hard cheese). Examples of the natural cheese include chevre cheeses (goat's milk cheeses) such as Sainte Maure de Touraine, Crottin de Chavignol, and Valençay, fresh cheeses such as cottage, cream cheese, string cheese, mozzarella, and ricotta, wash cheeses such as Pont-l'Évêque, Livarot, and Limberger, semi-hard cheeses such as Gouda and Samsoe, hard cheeses such as Emmental, Comté, and Parmigiano Reggiano, bloomy rind cheeses such as camembert and Brie, and blue cheeses such as Gorgonzola, Stilton, and Roquefort, but examples are not limited to these. Examples of the processed cheese include cheese produced by heat-melting these natural cheeses.

### <2> Preparation

The preparation is a preparation for reforming cheese containing one or more kinds of ingredients selected from a reducing agent, a transglutaminase, and a calcium ingredient, provided that the preparation contains at least a reducing agent, or contains at least a combination of a transglutaminase and a calcium ingredient.

Namely, the preparation is a preparation for reforming cheese containing the following ingredient (A) or (B) :
(A) a reducing agent;
(B) a transglutaminase and a calcium ingredient.

When the preparation contains the ingredient (A), the preparation may or may not further contain a transglutaminase and/or a calcium ingredient. When the preparation contains the ingredient (B), the preparation may or may not further contain a reducing agent. That is, the preparation invention may be, for example, a preparation containing a reducing agent and a transglutaminase, a preparation containing a reducing agent and a calcium ingredient, or a preparation containing a reducing agent, a transglutaminase, and a calcium ingredient. For the preparation, containing the ingredient (A) and further containing a transglutaminase and a calcium ingredient may be synonymous to containing the ingredient (B) and further containing a reducing agent. In the present invention, the reducing agent, transglutaminase, and calcium ingredient are generically referred to as "active ingredients" (they are included only when they are used (contained or added)).

The preparation can be used in order to reform cheese. Specifically, by processing a food raw material containing a milk protein (also referred to as "milk raw material") with the preparation to produce cheese, reformed cheese can be obtained. That is, the "preparation for reforming cheese" may be specifically an auxiliary agent for cheese production. The "reforming" of cheese is not limited to such a case that although cheese can be produced without using the active ingredients, reformed cheese can be produced by using the active ingredients compared with a case of not using the active ingredients, but also includes such a case that although cheese cannot be produced without using the active ingredients, it becomes possible to produce cheese by using the active ingredients. Examples of "reforming" of cheese include improvement in yield, improvement in breaking strength, improvement in milk flavor, and improvement in moldability. The "yield" is a ratio of the weight of cheese to the weight of the milk raw material. Improvement in yield may be provided by, for example, improvement in water retention, improvement in amount of milk proteins, or combination of these. The "breaking strength" is a physical property used as an index of "hardness" of cheese at the time of biting it.

The reducing agent is not particularly limited so long as it exhibits a reducing action. The reducing agent may be, for example, one that directly or indirectly contributes to reduction of a milk raw material as the object of the treatment. Examples of the reducing agent include reduced glutathione, cysteine, γ-glutamylcysteine, sulfurous acid, ascorbic acid, erythorbic acid, and a salt of these. The salt is not particularly limited so long as it can be orally ingested. Specific examples of salt of an acidic group such as carboxyl group include, for example, ammonium salts, salts with an alkali metal such as sodium and potassium, salts with an alkaline earth metal such as calcium and magnesium, aluminum salts, zinc salts, salts with an organic amine such as triethylamine, ethanolamine, morpholine, pyrrolidine, piperidine, piperazine, and dicyclohexylamine, and salts with a basic amino acid such as arginine and lysine. Specific examples of salt of a basic group such as amino group include, for example, salts with an inorganic acid such as hydrochloric acid, sulfuric acid, phosphoric acid, nitric acid, and hydrobromic acid, salts with an organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, and methylmalonic acid, and salts with an organic sulfonic acid such as methanesulfonic acid, benzenesulfonic acid, and p-toluenesulfonic acid. As the salt, one kind of salt may be used, or two or more kinds of salts may be used in combination. The reducing agent may or may not contain an ingredient other than the reducing agent. That is, the reducing agent may be a preparation or material containing such a reducing agent as mentioned above. Examples of such a material include yeast extracts. For example, specific examples of reduced glutathione include yeast extracts containing reduced glutathione such as Aromild U (yeast extract containing 8% glutathione, Kohjin). When a preparation or material containing a reducing agent such as yeast extracts containing reduced glutathione is used, the contained amount (concentration) and addition amount of the reducing agent shall be calculated on the basis of the amount of the reducing agent itself contained in the preparation or material, unless otherwise indicated. As the reducing agent, one kind of reducing agent may be used, or two or more kinds or reducing agents may be used in combination.

Transglutaminase is an enzyme that catalyzes the reaction of binding a glutamine residue and a lysine residue in proteins to crosslink the proteins. In particular, by using a transglutaminase in combination, more rigid gel is formed, and it is expected that the breaking strength and yield are improved. Origin of the transglutaminase is not particularly limited. The transglutaminase may be one derived from any of microorganism, animal, plant, and so forth. As the transglutaminase, a homologue or artificially modified enzyme of a known transglutaminase may also be used. The transglutaminase may also be a recombinant enzyme.

Examples of the calcium ingredient include calcium and calcium-containing substances. Calcium may be in the form of any of simple substance, ion, and so forth. Examples of the calcium-containing substance include calcium salts and calcium-containing yeasts. Examples of the calcium salt include calcium chloride, calcium citrate, calcium phosphate, calcium sulfate, calcium carbonate, calcium hydroxide, calcium oxide, calcined calcium, and so forth. The calcium salt may be in the form of any of salt, ion, and so forth. As calcium-containing yeast, for example, there are known those obtained by adding calcium to yeast at the time of culture thereof so that the calcium is incorporated into yeast cells, but the calcium-containing yeast is not limited to them. Specific examples of the calcium-containing yeast include the calcium-containing yeast marketed by Sceti. As the calcium ingredient, among these, a calcium salt is preferred, and calcium chloride is more preferred. As the calcium ingredient, one kind of the ingredient may be used, or two or more kinds of the ingredients may be used in combination.

The preparation may contain an ingredient other than the active ingredients (henceforth referred to as "other ingredient"), so long as the effect of reforming cheese can be obtained. As the other ingredient, for example, those used in seasonings, foods, drinks, or drugs by mixing can be used. Examples of the other ingredient include excipients such as lactose, glucose, dextrin, polysaccharide thickeners, starch, modified starch, and reduced malt sugar, proteins such as plant proteins, gluten, albumen, gelatin, and casein, seasonings such as sodium glutamate, animal extracts, fish extracts, protein hydrolysates, and protein partial decomposition products, alkali agents (pH adjustors) such as sodium carbonate and potassium carbonate, chelating agent such as gluconic acid and citric acid, and other food additives such as alginic acid, brine, fat or oil, dye, acidulant, and perfume.

The preparation may contain, for example, an ingredient effective for cheese production as the other ingredient. Examples of such an ingredient effective for cheese production include lactic acid bacteria and milk clotting enzymes.

As the other ingredient, one kind of ingredient may be used, or two or more kinds of ingredients may be used in combination. The preparation can be produced by, for example, mixing the active ingredients with these other ingredients as required.

Form of the preparation is not particularly limited. The preparation may be in the form of any of liquid, paste, granule, powder, and so forth.

The mixing amounts (concentrations) of the ingredients (namely, the active ingredients and other ingredient(s) as required) in the preparation are not particularly limited so long as the effect of reforming cheese can be obtained. The amounts (concentrations) of the ingredients in the preparation may be higher than 0% (w/w), and lower than 100% (w/w). The concentrations of the ingredients in the preparation can be appropriately determined according to various conditions such as types of the ingredients, amounts of the ingredients added at the time of cheese production, and amount of the preparation used at the time of cheese production.

The total contained amount (total concentration) of the active ingredients in the preparation may be higher than 0% (w/w), and lower than 100% (w/w). The total contained amount (total concentration) of the active ingredients in the preparation may be, for example, 1 ppm (w/w) or higher, 10 ppm (w/w) or higher, 100 ppm (w/w) or higher, or 1000 ppm (w/w) or higher, or 99.9% (w/w) or lower, 50% (w/w) or lower, 10% (w/w) or lower, or 1% (w/w) or lower, or within a range defined with a combination thereof.

When a reducing agent and a transglutaminase are used as the active ingredients, the contained amount (concentration) of the reducing agent in the preparation is, for example, preferably 0.0000000303 to 30.3 g, more preferably 0.00000303 to 0.303 g, per 1 U of the transglutaminase.

When a reducing agent and a calcium ingredient are used as the active ingredients, the contained amount (concentration) of the reducing agent in the preparation is, for example, preferably 0.000001 to 10 g, more preferably 0.00001 to 1 g, per 1 g of the calcium ingredient.

When a transglutaminase and a calcium ingredient are used as the active ingredients, the contained amount (concentration) of the calcium ingredient in the preparation is, for example, preferably 0.000005 to 50 g, more preferably 0.00005 to 5 g, per 1 U of the transglutaminase.

The activity of transglutaminase is measured and defined by the hydroxamate method. That is, in a reaction system containing benzyloxycarbonyl-L-glutaminylglycine and hydroxylamine as substrates in a Tris buffer of pH 6.0 at a temperature of 37°C, transglutaminase is allowed to act on the substrates, the generated hydroxamic acid is made into an iron complex in the presence of trichloroacetic acid, absorbance is measured at 525 nm, the amount of hydroxamic acid is obtained by using a calibration curve, and the amount of the enzyme that produces 1 µmol of hydroxamic acid in 1 minute is defined as 1 unit (1 U) (refer to Japanese Patent Laid-open (Kokai) No. 64-27471).

The concentrations of the active ingredients in the preparation can be set so that, for example, the total concentration and contained amount ratios of the active ingredients mentioned above are satisfied. The concentrations of the active ingredients in the preparation can be set so that, for example, the addition amounts of the active ingredients are within desired ranges when cheese is produced by using the preparation. The addition amounts of the active ingredients may be, for example, within the ranges exemplified in the explanations of the method of the present invention (mentioned later).

The ingredients contained in the preparation (namely, the active ingredients and other ingredient(s) as required) may be contained in the preparation as a mixture, or they may be separately contained as each of them or as an arbitrary combination of them. For example, the preparation may be provided as a set of the reducing agent and the transglutaminase separately packaged. In such a case, the ingredients contained in the set can be appropriately used together at the time of use.

### <3> Method of the present invention

In the present invention, cheese can be reformed by using the active ingredients (namely, the reducing agent, transglutaminase, and calcium ingredient (only when they are used)). Specifically, by producing cheese with treating a milk raw material with the active ingredients, reformed cheese can be obtained. That is, the method of the present invention is a method for reforming cheese comprising treating a milk raw material with the active ingredients. An embodiment of the method of the present invention is a method for producing cheese comprising treating a milk raw material with the active ingredients. To "treat a milk raw material with the active ingredients" is also expressed as to "allow the active ingredients to act on a milk raw material". The step of "treating a milk raw material with the active ingredients" is also referred to as "reforming step".

To the mode of use of the active ingredients in the method of the present invention, the descriptions concerning the mode of use of the active ingredients for the preparation can be *mutatis mutandis* applied.

That is, the method of the present invention is specifically a method for reforming cheese, which comprises treating a milk raw material with the following ingredient (A) or (B):
(A) a reducing agent;
(B) a transglutaminase and a calcium ingredient.

An embodiment of the method of the present invention is specifically a method for producing cheese, which comprises treating a milk raw material with the following ingredient (A) or (B):
(A) a reducing agent;
(B) a transglutaminase and a calcium ingredient.

When the method of the present invention comprises treating the milk raw material with the ingredient (A), the method of the present invention may or may not further comprise treating the milk raw material with a transglutaminase and/or a calcium ingredient. When the method of the present invention comprises treating the milk raw material with the ingredient (B), the method of the present invention may or may not further comprise treating the milk raw material with a reducing agent. As for the method of the present invention, comprising treating a milk raw material with the ingredient (A) and comprising further treating the milk raw material with a transglutaminase and a calcium ingredient may be synonymous to comprising treating the milk raw material with the ingredient (B) and comprising further treating the milk raw material with a reducing agent.

In the present invention, for example, by treating a milk raw material with the preparation, the milk raw material can be treated with the active ingredients. That is, in other words, the method of the present invention may be a method for reforming cheese, which comprises treating a milk raw material with the preparation. An embodiment of the method of the present invention may be a method for producing cheese, which comprises treating a milk raw material with the preparation.

The cheese to be produced according to the present invention can be produced from a milk raw material by the same method as that for usual cheese production except that the milk raw material is treated with the active ingredients. That is, the method of the present invention may comprise such a step of producing cheese to be described later.

The milk raw material contains a milk protein. The milk raw material is not particularly limited, so long as cheese can be produced from it by the method of the present invention. Examples of the milk protein include casein and milk serum proteins (whey proteins). Examples of the milk serum proteins include α-lactalbumin and β-lactoglobulin. The milk raw material may contain, for example, one or more kinds of these milk proteins, or all of these proteins. It is preferred that the milk raw material contains at least casein. The contained amount (concentration) of the milk proteins in the milk raw material can be measured by, for example, measuring nitrogen by the Kjeldahl method, and multiplying the nitrogen amount by the protein conversion coefficient. Examples of the milk raw material include cow milk, goat milk, sheep milk, buffalo milk, reindeer milk, burro milk, and camel milk. The milk raw material may be or may not be fresh milk (original milk). The milk raw material may be or may not be subjected to, for example, such a treatment as heat treatment and homogenization. For example, the ingredients of the milk raw material may be or may not be adjusted. The milk raw material may be, for example, whole milk, skimmed milk, partially skimmed milk, milk serum (whey), cream, buttermilk, processed product of these, ingredient-adjusted product of these, or a combination of these. Examples of the ingredient-adjusted product include, for example, calcium-enriched milk. As the milk raw material, one kind of the raw material may be used, or two or more kinds of the raw materials may be used in combination.

The milk raw material has been heat-treated. Having been subjected to a heat treatment is also referred to as "having a heating history". The temperature of the heat treatment is 120 °C to 150 °C, and the time of the heat treatment is 0.5 to 15 seconds in the method of the present invention. Examples of the heat treatment include heat treatment at a low temperature (also referred to as "low temperature heat treatment"), heat treatment at a high temperature (also referred to as "high temperature heat treatment"), and heat treatment at an ultra high temperature (also referred to as "ultra high temperature heat treatment"). Examples of the conditions for the low temperature heat treatment include the conditions for low temperature sterilization of cow milk, for example, the conditions of heating at 63 to 68°C for about 30 minutes. Examples of the conditions for the high temperature heat treatment include the conditions of high temperature sterilization of cow milk, for example, the conditions of heating at 71 to 75°C for about 15 seconds. Examples of the conditions for the ultra high temperature heat treatment include the conditions of the ultra high temperature sterilization of cow milk. The temperature of the ultra high temperature heat treatment is, for example, usually 120°C or higher, or may be preferably 120 to 150°C. The time of the ultra high temperature heat treatment is, for example, usually 0.5 to 15 seconds, or may be preferably 1 to 5 seconds, more preferably 1 to 3 seconds. The ultra high temperature heat treatment may be based on the direct heating method, or indirect heating method. The ultra high temperature heat treatment may comprise preheating. In general, the direct heating method does not comprise preheating in many cases, but the indirect heating method comprises preheating in many cases. Examples of the conditions of preheating include conditions of heating at 80 to 85°C for 1 to 5 minutes. The milk raw material subjected to the high temperature heat treatment such as whole milk subjected to the high temperature heat treatment may also be referred to as "ultra high temperature-sterilized milk". With a usual method for producing cheese, in particular, it is difficult or impossible to produce cheese by using ultra high temperature-sterilized milk as a raw material. However, according to the method of the present invention, cheese of good quality can be produced by using ultra high temperature-sterilized milk as a raw material.

Cheese can be produced through a curdling step. Specifically, the curdling step means a step of aggregating (coagulating) the ingredients in the milk raw materials such as milk proteins. The curdling step can be carried out by, for example, addition of a lactic acid bacterium (lactic acid fermentation), addition of a milk clotting enzyme, addition of an acid, heating, or a combination of these. For example, a lactic acid bacterium may be added to perform lactic acid fermentation, and then rennet may be added to further advance the curdling step. Examples of the lactic acid bacterium include *Lactococcus* bacteria, *Lactobacillus* bacteria, and *Bifidobacterium* bacteria. As the lactic acid bacterium, for example, those marketed as cheese starter can be used. Examples of the milk clotting enzyme include rennet and chymosin. Origin of the milk clotting enzyme is not particularly limited. The milk clotting enzyme may be one derived from any of microorganism, animal, plant, and so forth. As the milk clotting enzyme, a homologue or artificially modified enzyme of a known milk clotting enzyme may also be used. The milk clotting enzyme may also be a recombinant enzyme. Examples of the acid include vinegar and lemon juice. The time of the curdling step may be, for example, 15 minutes or longer, 30 minutes or longer, 45 minutes or longer, 1 hour or longer, 2 hours or longer, or 3 hours or longer, or 10 hours or shorter, or within a range defined with a combination thereof. As a result of the curdling step, aggregates (cheese curd) are produced. By separating the cheese curd from the milk serum (whey) and collecting them, fresh cheese can be obtained. The separation step can be carried out by, for example, chopping, stirring, compression, natural separation (separation by gravity), or a combination of these. The collected cheese curd (fresh cheese) may be further subjected to such a step as molding, salting, drying, and maturing. Through a maturing step, mature cheese can be obtained. By heat-melting the natural cheese obtained as described above (fresh cheese and mature cheese), processed cheese can be produced. By using cheese as a raw material, foods and drinks containing cheese such as cheese foods can be produced.

The active ingredients may be made to act on the milk raw material at any stage of the production process of cheese so long as the cheese reforming effect is obtained. By making the active ingredients as they are or a solution thereof prepared as required coexist with the milk raw material, they can be allowed to act on the milk raw material. For example, the active ingredients may be added to a milk raw material, or a milk raw material may be mixed with a treatment solution containing the active ingredients. Such operations for making the active ingredients coexist with a milk raw material are henceforth also generically referred to as "addition" of the active ingredients. Order of the active ingredients to be allowed to act on a milk raw material is not particularly limited. The active ingredients may be allowed to act on a milk raw material by simultaneously adding all the active ingredients to the milk raw material, or by adding them separately as each of them or as an arbitrary combination of them, to the milk raw material. The active ingredients are preferably added before completion of the curdling step. The active ingredients may be added, for example, simultaneously with the lactic acid bacterium, or before or after the addition of the lactic acid bacterium. The active ingredients may be added, for example, simultaneously with rennet, or before or after the addition of rennet. Treatment with the preparation can also be carried out in a similar manner.

Conditions for performing the reforming step of the method of the present invention are not particularly limited so long as the cheese reforming effect can be obtained. The conditions for performing the reforming step of the method of the present invention can be appropriately set according to various conditions such as types and addition amounts of the active ingredients, and type of the milk raw material. For example, when a transglutaminase is used, the reaction time is not particularly limited so long as it is determined so that the enzyme can act on the substrate substances. The reaction time may be very short time or very long time. The reaction time is preferably, for example, 1 minute to 24 hours, more preferably 5 minutes to 24 hours, further preferably 5 minutes to 5 hours. When a transglutaminase is used, the reaction temperature is not particularly limited, so long as it is set within such a range that the enzyme maintains the activity. The reaction temperature is preferably, for example, 0 to 80°C. That is, a sufficient reaction time can be secured even while the milk raw material undergoes a usual curdling step of the cheese production process. In the method of the present invention, the cheese production process may also serve as the reforming step, or the reforming step may be separately carried out.

In the method of the present invention, so long as the cheese reforming effect can be obtained, ingredient other than the milk raw material and the active ingredients may also be used. Examples of such an ingredient include raw materials usually used for the cheese production other than the milk raw material. To such an ingredient, the descriptions mentioned for the ingredient other than the active ingredients in the explanations of the preparation can be *mutatis mutandis* applied.

The quantitative ratio of the milk raw material to all the raw materials (all the ingredients) used in the method of the present invention is not particularly limited so long as cheese can be produced by the method of the present invention. The quantitative ratio of the milk raw material to all the raw materials (all the ingredients) used in the method of the present invention may be, for example, 50% (w/w) or higher, 70% (w/w) or higher, 90% (w/w) or higher, 95% (w/w) or higher, or 99% (w/w) or higher.

The addition amounts and addition amount ratios of the ingredients used in the method of the present invention (namely, the active ingredients and other ingredient(s) as required) are not particularly limited so long as the cheese reforming effect can be obtained. The addition amounts and addition amount ratios of the ingredients used in the method of the present invention can be appropriately determined according to various conditions such as conditions for performing the reforming step, and type of the milk raw material.

When a reducing agent is used as the active ingredient, the addition amount of the reducing agent is, for example, preferably 0.000001 to 0.01 g, more preferably 0.00001 to 0.001 g, per 1 g of the milk raw material. When a reducing agent and a transglutaminase are used as the active ingredients, the addition amount of the reducing agent is, for example, preferably 0.0000000303 to 30.3 g, more preferably 0.00000303 to 0.303 g, per 1 U of the transglutaminase. When a reducing agent and a calcium ingredient are used as the active ingredients, the addition amount of the reducing agent is, for example, preferably 0.000001 to 10 g, more preferably 0.00001 to 1 g, per 1 g of the calcium ingredient.

When a transglutaminase is used as the active ingredient, the addition amount of the transglutaminase is, for example, preferably 0.00033 to 33 U, more preferably 0.0033 to 3.3 U, per 1 g of milk proteins. When a calcium ingredient is used as the active ingredient, the addition amount of the calcium ingredient is, for example, preferably 0.001 to 1 g, more preferably 0.01 to 1 g, still more preferably 0.03 to 0.5 g, per 1 g of the milk raw material. When a transglutaminase and a calcium ingredient are used as the active ingredients, the addition amount of the calcium ingredient is, for example, preferably 0.00000005 to 50 g, more preferably 0.000005 to 0.5 g, per 1 U of the transglutaminase.

### Examples

Hereafter, the present invention will be more specifically explained with reference to examples.

### <Example 1>

Ultra high temperature-sterilized milk (1021 g, heat-treated at 130°C for 2 seconds, Koshin Milk Products) and low temperature-sterilized milk (1021 g, heat-treated at 66°C for 30 minutes, Takanashi Milk Products) were each kept warm at 35°C for 30 minutes in an incubator. Then, 1 ml of a solution obtained by suspending a lactic acid bacterium R-707 (0.3541 g, Chr. Hansen Japan) in 10 ml of milk was added to each milk, and the mixture was left standing at 35°C for 60 minutes. Then, a reducing agent and transglutaminase were added in the addition amounts shown in Table 1, and 0.5 ml of a solution obtained by dissolving rennet CHY-MAX (0.2 g, Chr. Hansen Japan) in 5 ml of water was immediately added to start curdling. A glutathione yeast extract "Aromild U" (Kohjin) was used as the reducing agent, and a transglutaminase preparation "Activa TG" (Ajinomoto, henceforth also referred to as "TG") was used as the transglutaminase. In tables, "U/gp" used for TG means the TG activity (U) per 1 g of milk proteins. After the curdling for 3 hours, the produced cheese curd was cut in width and length of 2 cm with a metal skewer to promote discharge of whey. Then, the cheese curd was moved on a strainer having a stretched net, and discharge of whey was allowed at room temperature for 3 hours. The discharge of whey was allowed with reversing the upper and lower sides of the cheese curd every 30 minutes so that whey is uniformly discharged by the gravity. After the discharge of whey, the cheese curd was moved to an incubator at a temperature of 22°C and humidity of 50%, and left standing for 15 hours to obtain cheese.

### [Table 1]

**Table 1**

| No. | Milk raw material | Test group | Aromild U % based on milk | TG (U/gp) |
|---|---|---|---|---|
| #1 | Low temperature-sterilized milk | Additive-free | 0 | 0 |
| #2 | Ultra high temperature-sterilized milk | Additive-free | 0 | 0 |
| #3 | | Aromild U 0.0264% | 0.0264 | 0 |
| #4 | | TG 2 U/g | 0 | 2 |
| #5 | | TG 2 U/g, Aromild U 0.0264% | 0.0264 | 2 |

Yield of the obtained cheese (measured weight (g)/1021 (g) x 100 (%)) was calculated. After the obtained cheese was equally divided into four pieces, and cut in a width of 2 cm, a physical property thereof was evaluated by using a texture analyzer (TA-XT2i, Eko Instruments). As the physical property, "breaking strength" serving as an index of "hardness" of cheese was measured. Further, in order to confirm flavor and mouthfeel of the obtained cheese, "hardness" of the cheese was evaluated by organoleptic evaluation performed by a panel of five persons, and graded with scores ranging from 0 to 5 with increments of 0.5. The "hardness" was defined as strength of stress sensed by teeth at the time of biting the cheese. As for the organoleptic evaluation score, "score 5" means very strong, "score 4" means considerably strong, "score 3" means moderately strong, "score 2" means slightly weak, "score 1" means weak, and "score 0" means very weak. The results are shown as averages of the scores given by the five persons of the panel. Further, comments are mentioned for flavor and moldability.

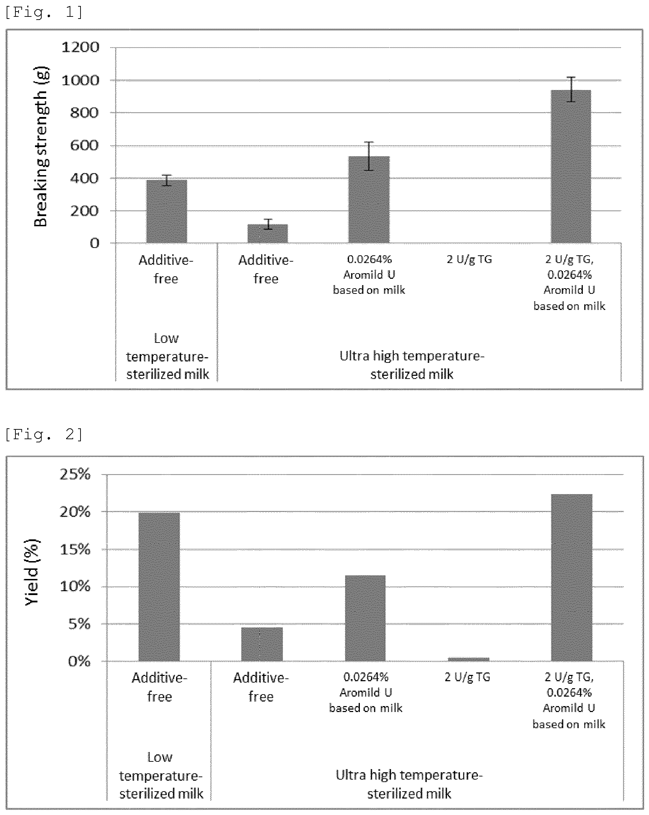

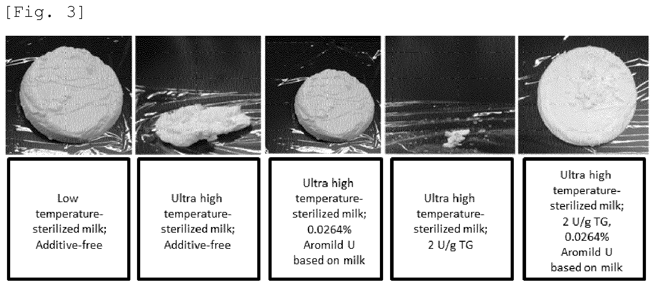

There are shown the measurement results of the physical property in Fig. 1, the measurement results of the yield in Fig. 2, photographs of the obtained cheeses in Fig. 3, and the organoleptic evaluation results in Table 2. When the low temperature-sterilized milk was used, cheese showing a breaking strength of 300 g or higher and a yield of about 19% was obtained, and good results were also obtained in the organoleptic evaluation. On the other hand, when the ultra high temperature-sterilized milk was used, the additive-free product showed low breaking strength and yield, and thus favorable cheese could not be obtained. When TG alone was added to the ultra high temperature-sterilized milk, it was substantially impossible to obtain cheese. On the other hand, when Aromild U alone was added to the ultra high temperature-sterilized milk, although the yield was lower than that obtained by using the low temperature sterilized milk, a higher value of breaking strength was obtained than that obtained by using the low temperature sterilized milk, and a cheese showing increased milk flavor was obtained. When Aromild U and TG were added in combination to the ultra high temperature-sterilized milk, both breaking strength and yield were markedly improved to 945 g and 22.3% compared with the other test groups, and a harder and larger cheese could be obtained than that obtained by using the low temperature-sterilized milk. As described above, when Aromild U alone was added to the ultra high temperature-sterilized milk, and when Aromild U and TG were added in combination to the ultra high temperature-sterilized milk, cheeses of good quality showing different characteristics were obtained. That is, it has become clear that, according to the present invention, cheese can be reformed, and even when ultra high temperature-sterilized milk is used, cheese of good quality equivalent to that of the cheese produced by using low temperature-sterilized milk can be obtained.

### [Table 2]

**Table 2**

| Milk raw material | Test group | Evaluation item | |
|---|---|---|---|
| | | Hardness (score) | Others (taste, moldability) |
| Low temperature-sterilized milk | Additive-free | 3.0 | - Strong milk flavor |
| | | | - Good moldability |
| Ultra high temperature-sterilized milk | Additive-free | 0.5 | - Weak milk flavor |
| | | | - Bad moldability |
| | Aromild U 0.0264% | 3.5 | - Stronger milk flavor |
| | | | - Good moldability |
| | TG 2 U/g | No data | - Cheese was not molded. |
| | | | - Organoleptic evaluation was impossible. |
| | TG 2 U/g, Aromild U 0.0264% | 5.0 | - Product had milk flavor. |
| | | | - Extremely good moldability |

### <Example 2>

In the same manner as that of Example 1, cheeses were produced by using the compositions shown in Tables 4 and 5, and the obtained cheeses were evaluated. In Tables 4 and 5, "TG" means the transglutaminase preparation "Activa TG" (Ajinomoto). In Tables 4 and 5, "U/gp" mentioned for TG means the TG activity (U) per 1 g of milk proteins. The organoleptic evaluation criteria are shown in Table 3. The organoleptic evaluation was performed by choosing a score from the range of 5 to 1 with increments of 0.5. The target values or scores of the qualities of cheese were 250 (g) for breaking strength, 19.8 (%) for yield (amount of formed curd based on milk), 3.0 (evaluation score) for mouthfeel, 3.0 (evaluation score) for milk taste and flavor.

### [Table 3]

**Table 3: Organoleptic evaluation criteria**

| Evaluation score | Mouthfeel of cheese |
|---|---|
| 5 | Cheese surely has hardness, but is smooth, and favorably broken in mouth. |
| 4 | Cheese has smoothness, and is favorably broken in mouth. |
| 3 | Cheese is favorably broken in mouth. |
| 2 | Cheese shows slightly watery mouthfeel, and poor breaking mouthfeel. |
| 1 | Cheese is watery, and shows no breaking mouthfeel. |
| | |

| Evaluation score | Milk taste and flavor |
|---|---|
| 5 | Taste and flavor of milk are strong and favorable. |
| 4 | Taste and flavor of milk are slightly strong and favorable. |
| 3 | Taste and flavor of milk are at ordinary levels and acceptable. |
| 2 | Taste and flavor of milk are slightly weak and unfavorable. |
| 1 | Taste and flavor of milk are weak and unfavorable. |

### <1> Production of cheese from ultra high temperature-sterilized milk (1)

The compositions and the results are shown in Table 4. The data for compositions mentioned in Table 4 are the same as the data of <Example 1>. When the ultra high temperature-sterilized milk was used, use of the reducing agent provided improvement in the quality of cheese. In addition, use of the reducing agent and TG in combination provided higher improvement in the quality of cheese than the case where the reducing agent alone was used.

### [Table 4]

**Table 4**

| <Compositions> | | | | | |
|---|---|---|---|---|---|
| No. | Milk raw material | Test group | TG (U/gp) | Glutathione yeast extract % based on milk | |
| #1-1 | Ultra high temperature-sterilized milk | Additive-free | 0 | 0 | |
| #1-2 | Ultra high temperature-sterilized milk | TG | 2.0 | 0 | |
| #1-3 | Ultra high temperature-sterilized milk | Glutathione yeast extract | 0 | 0.0264 | |
| #1-4 | Ultra high temperature-sterilized milk | TG, Glutathione yeast extract | 2.0 | 0.0264 | |

| <Results> | | | | | |
|---|---|---|---|---|---|
| No. | Breaking strength (g) | Yield (%) | Mouthfeel | Milk taste and flavor | Comment for total evaluation and organoleptic evaluation |
| #1-1 | 120 | 4.6 | 1.0 | 2.0 | Almost no curd was formed, and product was watery. |
| #1-2 | Not measurable | 0.5 | 1.0 | 2.0 | Almost no curd was formed. |
| #1-3 | 533 | 11.5 | 3.0 | 3.5 | Curd was formed, and milk flavor increased. |
| #1-4 | 942 | 22.4 | 3.0 | 3.0 | Larger curd was formed, and milk flavor increased. |

### <2> Production of cheese from ultra high temperature-sterilized milk (2)

The compositions and the results are shown in Table 5. When the ultra high temperature-sterilized milk was used, use of calcium chloride provided improvement in the quality of cheese. In addition, use of calcium chloride and TG in combination provided higher improvement in the quality of cheese than the case where calcium chloride alone was used.

### [Table 5]

**Table 5**

| <Compositions> | | | | | |
|---|---|---|---|---|---|
| No. | Milk raw material | Test group | | Calcium chloride % based on milk | TG (U/gp) |
| #2-1 | Ultra high temperature-sterilized milk | Additive-free | | 0 | 0 |
| #2-2 | Ultra high temperature-sterilized milk | Calcium chloride | | 0.080 | 0 |
| #2-3 | Ultra high temperature-sterilized milk | Calcium chloride, TG | | 0.080 | 1.5 |

| <Results> | | | | | |
|---|---|---|---|---|---|
| No. | Breaking strength (g) | Yield (%) | Mouthfeel | Milk taste and flavor | Comment for total evaluation and organoleptic evaluation |
| #2-1 | 120 | 4.6 | 1.0 | 2.0 | Almost no curd was formed. Product was watery. |
| #2-2 | 366 | 21.2 | 3.0 | 2.5 | Curd was formed, and milk flavor increased. Product showed acridity. |
| #2-3 | 1213 | 24.7 | 3.0 | 3.0 | Large curd was formed. Product showed no acridity. |

### Industrial Applicability

According to the present invention, cheese can be reformed. According to the present invention, cheese of good quality can be produced especially from a milk raw material subjected to such a heat treatment as ultra high temperature sterilization. Therefore, the present invention is extremely useful in the field of food industry.

## Claims

1. A method for producing cheese, the method comprising
treating a milk raw material containing a milk protein with the following ingredient (A) or (B):
(A) one or more kinds of ingredients selected from reduced glutathione, cysteine, γ-glutamylcysteine, sulfurous acid, ascorbic acid, erythorbic acid, and a salt thereof;
(B) a transglutaminase and a calcium salt,
wherein the milk raw material containing a milk protein has been heat-treated at a temperature of 120°C to 150°C for 0.5 to 15 seconds.

2. The method according to claim 1, wherein the milk raw material consists of one or more kinds of raw materials selected from whole milk, skimmed milk, partially skimmed milk, milk serum, cream, buttermilk, a processed product thereof, and an ingredient-adjusted product thereof.

3. The method according to claim 1 or 2, wherein the reduced glutathione is used as a form of a yeast extract containing reduced glutathione.

4. The method according to any one of claims 1 to 3, wherein 0.000001 to 0.01 g of the reduced glutathione is added per 1 g of the milk raw material.

5. The method according to any one of claims 1 to 4, wherein when the method comprises treating the milk raw material with the ingredient (A), the method further comprises treating the milk raw material with a transglutaminase and/or a calcium salt.

6. The method according to any one of claims 1 to 5, wherein 0.00033 to 33 U of the transglutaminase is added per 1 g of the milk protein.

7. The method according to any one of claims 1 to 6, wherein the calcium salt is calcium chloride.

## Patentansprüche

1. Verfahren zur Herstellung von Käse, wobei das Verfahren
das Behandeln eines ein Milchprotein enthaltenden Milchrohmaterials, der, mit dem folgenden Bestandteil (A) oder (B) :
(A) einer oder mehrerer Arten von Inhaltsstoffen, ausgewählt aus reduziertem Glutathion, Cystein, γ-Glutamylcystein, schwefliger Säure, Ascorbinsäure, Erythorbinsäure, und einem Salz davon;
(B) einer Transglutaminase und einem Calciumsalz,
wobei das ein Milchprotein enthaltende Milchrohmaterial 0,5 bis 15 Sekunden bei einer Temperatur von 120°C bis 150°C wärmebehandelt worden ist.

2. Verfahren nach Anspruch 1, worin das Milchrohmaterial aus einer oder mehreren Arten von Rohmaterialien besteht, die unter Vollmilch, Magermilch, teilentrahmter Milch, Milchserum, Sahne, Buttermilch, einem verarbeiteten Produkt davon und einem inhaltsstoffangepassten Produkt davon ausgewählt sind.

3. Verfahren nach Anspruch 1 oder 2, worin das reduzierte Glutathion als eine Form eines reduziertes Glutathion enthaltenden Hefeextrakts verwendet wird.

4. Verfahren nach einem der Ansprüche 1 bis 3, wobei 0,000001 bis 0,01 g des reduzierten Glutathions pro 1 g des Milchrohmaterials zugegeben werden.

5. Verfahren nach einem der Ansprüche 1 bis 4, worin, wenn das Verfahren das Behandeln des Milchrohmaterials mit dem Bestandteil (A) umfasst, das Verfahren ferner das Behandeln des Milchrohmaterials mit einer Transglutaminase und/oder einem Kalziumsalz umfasst.

6. Verfahren nach einem der Ansprüche 1 bis 5, wobei 0,00033 bis 33 U der Transglutaminase pro 1 g des Milchproteins zugegeben werden.

7. Verfahren nach einem der Ansprüche 1 bis 6, worin das Kalziumsalz Kalziumchlorid ist.

## Revendications

1. Procédé de production de fromage, le procédé comprenant le traitement d'une matière première à base de lait contenant une protéine du lait avec l'ingrédient (A) ou (B) suivant :
(A) un ou plusieurs types d'ingrédients choisis parmi le glutathion réduit, la cystéine, la γ-glutamylcystéine, l'acide sulfureux, l'acide ascorbique, l'acide érythorbique, et un sel de ceux-ci ;
(B) une transglutaminase et un sel de calcium,
dans lequel la matière première à base de lait contenant une protéine du lait a été traitée thermiquement à une température de 120 °C à 150 °C pendant 0,5 à 15 secondes.

2. Procédé selon la revendication 1, dans lequel la matière première à base de lait est constituée d'un ou plusieurs types de matières premières choisies parmi le lait entier, le lait écrémé, le lait partiellement écrémé, le sérum de lait, la crème, le babeurre, un produit traité de ceux-ci, et un produit à ingrédient ajusté de ceux-ci.

3. Procédé selon la revendication 1 ou 2, dans lequel le glutathion réduit est utilisé sous une forme d'un extrait de levure contenant du glutathion réduit.

4. Procédé selon l'une quelconque des revendications 1 à 3, dans lequel de 0,000001 à 0,01 g du glutathion réduit est ajouté pour 1 g de la matière première à base de lait.

5. Procédé selon l'une quelconque des revendications 1 à 4, dans lequel lorsque le procédé comprend le traitement de la matière première à base de lait avec l'ingrédient (A), le procédé comprend en outre le traitement de la matière première à base de lait avec une transglutaminase et/ou un sel de calcium.

6. Procédé selon l'une quelconque des revendications 1 à 5, dans lequel de 0,00033 à 33 U de la transglutaminase est ajouté pour 1 g de la protéine du lait.

7. Procédé selon l'une quelconque des revendications 1 à 6, dans lequel le sel de calcium est du chlorure de calcium.
